Europäisches Patentamt

European Patent Office

Office européen des brevets

(19)

(11) Numéro de publication : **0 141 468**
**B1**

(12)

# FASCICULE DE BREVET EUROPÉEN

(45) Date de publication du fascicule du brevet :
17.05.89

(51) Int. Cl.⁴ : **H 05 K 11/02, B 60 R 11/02**

(21) Numéro de dépôt : 84201570.3

(22) Date de dépôt : 31.10.84

(54) Dispositif antivol par microprocesseur pour appareil radio.

(30) Priorité : 04.11.83 FR 8317562

(43) Date de publication de la demande :
15.05.85 Bulletin 85/20

(45) Mention de la délivrance du brevet :
17.05.89 Bulletin 89/20

(84) Etats contractants désignés :
DE FR GB IT NL

(56) Documents cités :
EP-A- 0 057 892
FR-A- 2 448 077
FR-A- 2 519 832
L'ONDE ELECTRIQUE, vol. 59, no. 11, novembre 1979,
page 11, Paris, FR; "La voiture "intelligente" réalisée
par SIEMENS et BMW"
IBM TECHNICAL DISCLOSURE BULLETIN, vol. 25,
no. 4, septembre 1982, pages 1975-1978, New York,
US; J.I. COMPTON: "Theft protection for typewriters"

(73) Titulaire : LA RADIOTECHNIQUE, Société Anonyme
dite:
51, rue Carnot BP 301
F-92156 Suresnes Cedex (FR)
FR
N.V. Philips' Gloeilampenfabrieken
Groenewoudseweg 1
NL-5621 BA Eindhoven (NL)
DE GB IT NL

(72) Inventeur : Mauge, Jacques SOCIETE CIVILE S.P.I.D.
209 rue de l'Université
F-75007 Paris (FR)

(74) Mandataire : Pinchon, Pierre et al
Société Civile S.P.I.D. 209 rue de l'Université
F-75007 Paris (FR)

## Description

La présente invention concerne un dispositif antivol pour appareil radio comportant des touches Ti et un microprocesseur assurant, d'une part, la gestion d'un mode « radio », et, d'autre part, la gestion d'un mode « antivol » dont les fonctions F'i sont commandées par les mêmes touches Ti de commande des fonctions Fi du mode « radio », la remise sous tension de l'appareil radio, après coupure de l'alimentation, provoquant un accès, dit accès involontaire, au mode « antivol » en position verrouillée, et le passage du mode « antivol », en position verrouillée, au mode « radio » étant obtenu en fournissant au microprocesseur un code identique à un code préalablement stocké dans une mémoire non volatile associée au microprocesseur.

L'invention trouve une application particulièrement avantageuse dans le domaine des appareils radio pour véhicules automobiles.

Un dispositif antivol conforme au préambule, relatif aux machines à écrire, est décrit dans IBM Technical Disclosure Bulletin (Vol. 25 No 4, Septembre 1982). Appliqué aux autoradios, ce dispositif fonctionne de la façon suivante : au moment où l'appareil est volé, l'alimentation venant de la batterie est coupée, puis, si l'appareil est remis sous tension, le microprocesseur ne fonctionnera pas en mode « radio » mais se mettra automatiquement en mode « antivol » en position verrouillée dont on ne pourra alors sortir, pour passer en mode « radio », qu'à l'aide du code susmentionné. Le dispositif connu présente l'inconvénient que les opérations d'identification de l'utilisateur doivent être renouvelées après chaque mise sous tension de la machine sans que celle-ci ait été nécessairement volée ou déplacée, ce qui apporte des contraintes excessives en cas d'usage répété par l'utilisateur habituel ou par une personne autorisée.

Le but de la présente invention est de proposer une procédure plus simple et mieux adaptée au problème spécifique posé.

En effet, selon la présente invention, un dispositif antivol pour appareil radio comportant des touches Ti et un microprocesseur assurant, d'une part, la gestion d'un mode « radio », et, d'autre part, la gestion d'un mode « antivol » dont les fonctions F'i sont commandées par les mêmes touches Ti de commande des fonctions Fi du mode « radio », la remise sous tension de l'appareil radio, après coupure de l'alimentation, provoquant un accès, dit accès involontaire, au mode « antivol » en position verrouillée, et le passage du mode « antivol », en position verrouillée, au mode « radio » étant obtenu en fournissant au microprocesseur un code identique à un code préalablement stocké dans une mémoire non volatile associée au microprocesseur, est notamment remarquable en ce que le microprocesseur permet un accès, dit accès volontaire, au mode « antivol », à partir du mode « radio », par manœuvre simultanée d'au moins deux des touches Ti. S'il le désire, l'utilisateur peut alors verrouiller le mode « antivol » afin, par exemple, d'interdire à des tiers l'accès au mode « radio ». Pour cela, la manœuvre d'au moins une touche des touches Ti permet de verrouiller le mode « antivol », après accès volontaire. Le retour au mode « radio » est obtenu par fourniture du code stocké dans la mémoire non volatile de l'appareil. De même, l'utilisateur a la possibilité de changer de code. Dans ce but, après accès volontaire au mode « antivol », une manœuvre d'une touche des touches Ti, suivie des manœuvres successives de la touche permettant le codage, et de deux des touches Ti permettant la validation-stockage, permet de changer le code stocké dans la mémoire non volatile et de revenir au mode « radio ».

La description qui va suivre, en regard des dessins annexés donnés à titre d'exemples non limitatifs fera bien comprendre en quoi consiste l'invention.

La figure 1 est un schéma synoptique d'un dispositif antivol selon l'invention.

La figure 2 précise les fonctions des touches de commande dans le mode « antivol ».

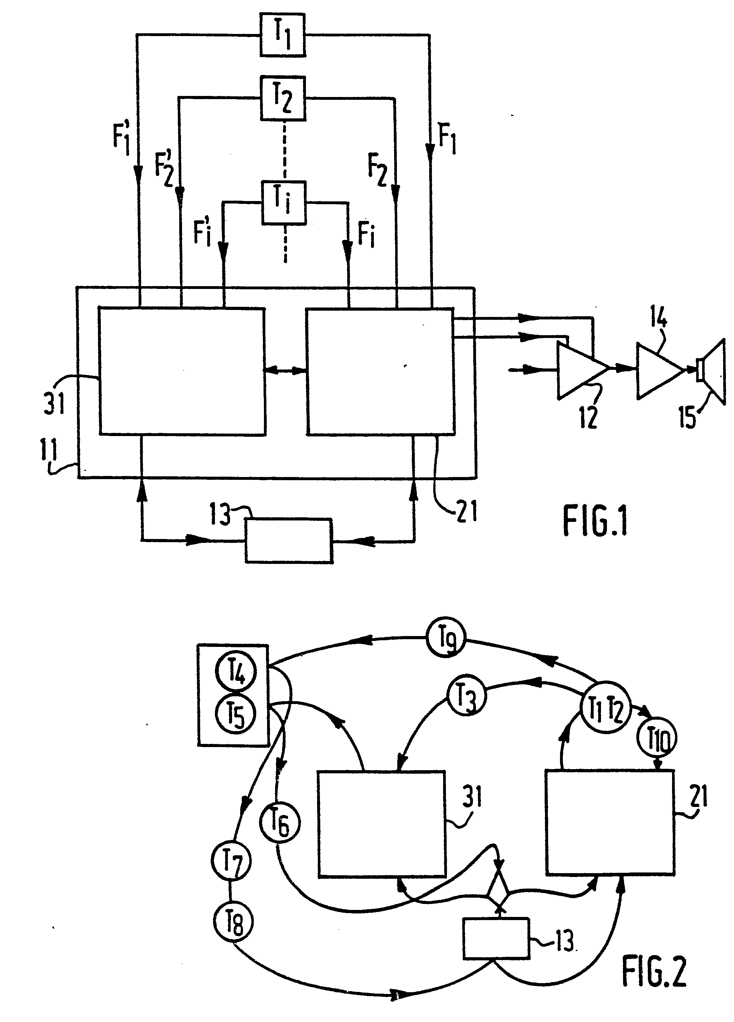

Les figures 1 et 2 montrent un dispositif antivol pour appareil radio comportant un microprocesseur 11 assurant la gestion d'un mode « radio », symbolisé par le bloc 21, dont les fonctions Fi sont commandées par des touches Ti. L'appareil radio comporte, entre autres, un préamplificateur 12, un amplificateur 14 et un haut-parleur 15. Comme le montrent les figures 1 et 2, le microprocesseur 11 assure également, la gestion d'un mode « antivol », symbolisé par le bloc 31, dont les fonctions F'i sont commandées par les mêmes touches Ti de commande. Dans l'exemple de réalisation montré sur la figure 1, le mode « antivol » 31 consiste à mettre hors fonctionnement l'appareil radio en bloquant toutes les fonctions radio assurées par le microprocesseur 11 de façon à interdire le passage du bloc 31 au bloc 21.

Le mode « antivol » 31 dispose d'une position verrouillée telle que, pour passer du mode « antivol » 31 en position verrouillée au mode « radio » 21, il est nécessaire de fournir au microprocesseur 11 un code identique à un code préalablement stocké dans une mémoire non volatile 13 associée au microprocesseur 11. A titre d'exemple, lorsque l'appareil radio comporte un récepteur à modulation de fréquence et un afficheur alphanumérique de la fréquence, le code stocké dans la mémoire non volatile 13 est constitué par les chiffres significatifs d'une fréquence de modulation de fréquence. Ce code est fourni au microprocesseur à l'aide de deux touches T4, T5, dites touches de codage, qui, dans ce cas, sont les touches défilement de la fréquence, en montant ou en descendant, d'un bouton de recherche d'émission à basculement. Le code ainsi fourni est validé par manœuvre d'une touche T6 de validation.

Un accès involontaire au mode « antivol » 31 en position verrouillée se produit lorsqu'après coupure de l'alimentation de l'appareil radio, celui-ci est remis sous tension. Le microprocesseur parcourt alors le cycle du mode « antivol » 31 et ne peut passer en mode « radio » 21 que si on lui fournit le code stocké dans la mémoire non volatile 13.

Il est également prévu de pouvoir accéder volontairement au mode « antivol » 31, par exemple, pour verrouiller le fonctionnement de l'appareil radio ou, encore, pour changer de code. L'accès volontaire au mode « antivol » 31, à partir du mode « radio » 21, est obtenu par manœuvre simultanée d'au moins deux touches T1, T2, dites touches d'accès volontaire au mode « antivol ». Le mode « antivol » peut alors être verrouillé par manœuvre d'une touche T3 de verrouillage. Cette possibilité présente l'intérêt d'offrir à l'utilisateur une véritable clé interdisant l'accès de tiers au mode « radio ». D'autre part, après accès volontaire au mode « antivol » 31, une manœuvre d'une touche de programmation T9, suivie des manœuvres successives des touches T4, T5 de codage, et de deux touches T7, T8 de validation-stockage permet de changer le code stocké dans la mémoire non volatile 13 et de revenir au mode « radio » 21. Enfin, après accès volontaire au mode « antivol » 31 il est toujours possible de revenir directement au mode « radio » 21 à l'aide d'une touche de retour T10.

Outre les touches T4, T5 de codage qui en mode « radio » assurent les fonctions de défilement de la bande de fréquence, les autres touches peuvent être choisies parmi celles qui en mode « radio » assurent les fonctions suivantes : augmentation du volume, diminution du volume, balance droite, balance gauche, balance avant, balance arrière, grave, aigu, etc... De préférence, les touches T7, T8 de validation-stockage d'un nouveau code sont les touches qui, en mode « radio », permettent de valider et stocker en mémoire des fréquences d'émission sélectionnées par l'utilisateur.

Enfin, dans le but d'empêcher un tiers de passer du mode « antivol » au mode « radio » en essayant tous les codes possibles, il est prévu qu'au bout de n (3 par exemple) retours consécutifs au mode « antivol », les touches Ti de commande sont inutilisables pendant un temps t de pénalisation, 5 mn par exemple ; ce temps t de pénalisation étant ensuite renouvelé après chaque retour au mode « antivol ».

## Revendications

1. Dispositif antivol pour appareil radio comportant des touches (Ti) et un microprocesseur (11) assurant, d'une part, la gestion d'un mode « radio » (21), et, d'autre part, la gestion d'un mode « antivol » (31) dont les fonctions (F'i) sont commandées par les mêmes touches (Ti) de commande des fonctions (Fi) du mode « radio » (21), la remise sous tension de l'appareil radio, après coupure de l'alimentation, provoquant un accès, dit accès involontaire, au mode « antivol » (31) en position verrouillée, et le passage du mode « antivol », en position verrouillée, au mode « radio » étant obtenu en fournissant au microprocesseur (11) un code identique à un code préalablement stocké dans une mémoire non volatile (13) associée au microprocesseur (11), caractérisé en ce que le microprocesseur permet un accès, dit accès volontaire, au mode « antivol » (31), à partir du mode « radio » (21), par manœuvre simultanée d'au moins deux (T1, T2) des touches (Ti).

2. Dispositif antivol selon la revendication 1, caractérisé en ce que la manœuvre d'au moins une (T3) des touches (Ti) permet de verrouiller le mode « antivol » (31), après accès volontaire.

3. Dispositif antivol selon la revendication 1, caractérisé en ce que, après accès volontaire au mode « antivol » (31), une manœuvre d'une (T9) des touches (Ti), suivie des manœuvres successives d'une (T4, T5) des touches (Ti) permettant le codage, et de deux (T7, T8) des touches (Ti) permettant la validation-stockage, permet de changer le code stocké dans la mémoire non volatile (13) et de revenir au mode « radio » (21).

4. Dispositif antivol selon la revendication 1, caractérisé en ce que, après accès volontaire au mode « antivol » (31), une action d'une (T10) des touches (Ti) permet de revenir directement au mode « radio » (21).

5. Dispositif antivol selon l'une des revendications 1 à 4, caractérisé en ce que, l'appareil radio comportant un récepteur à modulation de fréquence et un afficheur alphanumérique de la fréquence, le code stocké dans la mémoire non volatile (13) est constitué par les chiffres significatifs d'une fréquence de modulation de fréquence et en ce que la touche (T4, T5) permettant le codage est une touche de recherche d'émission.

6. Dispositif antivol selon l'une des revendications 3 à 5, caractérisé en ce que les touches (T7, T8) permettant la validation-stockage d'un nouveau code sont celles qui, en mode « radio », permettent de valider et stocker en mémoire des fréquences d'émission sélectionnées par l'utilisateur.

## Claims

1. An anti-theft device for radio sets, comprising keys (Ti) and a microprocessor (11) which provides the control of a « radio » mode (21), and also the control of an « anti-theft » mode (31) the functions F'i of which are selected by means of the same control keys (Ti) for the functions (Fi) of the radio mode (21), reapplying voltage to the radio set, when the power supply has been cut, causing an access denoted the unintentional access, to the « anti-theft » mode (31) in the locked state and passage from the « anti-theft » mode in the locked state to the « radio » mode being obtained by applying to the microprocessor (11) a code which is identical to a code previously stored in a non-volatile memory (13) associated with the microprocessor, is characterized in that the microprocessor permits an access, denoted intentional access, to the « anti-theft » mode (31) from the « radio » mode (21) by the simultaneous operation of at least two keys (T1, T2) of the keys (Ti).

2. An anti-theft device as claimed in Claim 1, characterized in that operating at least one (T3) of the keys Ti renders it possible to lock the « anti-theft » mode (31), after intentional access.

3. An anti-theft device as claimed in Claim 1, characterized in that, after each intentional access to the « anti-theft » mode (31), operating one (T9) of the keys (Ti), followed by successively operating one (T4, T5) of the keys (Ti) which allow coding, and two (T7, T8) of the keys (Ti) which allow the validation/storage, renders it possible to change the code stored in the non-volatile memory (13) and to return to the « radio » mode (21).

4. An anti-theft device as claimed in Claim 1, characterized in that, after intentional access to the « anti-theft » mode (31) operating one (T10) of the keys (Ti) permits a direct return to the « radio » mode.

5. An anti-theft device as claimed in one of the Claims 1 to 4, characterized in that in the radio set which comprises a frequency-modulation receiver and an alphanumerical display of the frequency, the code stored in the non-volatile memory (13) is formed by figures indicating a frequency-modulation frequency and in that the key (T4, T5) enabling the coding is a station-searching knob.

6. An anti-theft device as claimed in any one of the Claims 3 to 5, characterized in that the keys (T7, T8) allowing the validation-storage of a new code are those which, in the « radio » mode permit the validation and storage in the memory of the transmission frequencies selected by the user.

**Patentansprüche**

1. Antidiebstahlanordnung für ein Funkgerät mit Drucktasten (Ti) und einem Mikroprozessor (11) einerseits zum Gewährleisten der Steuerung eines Funkbetriebs (21) und andererseits der Steuerung eines Antidiebstahlbetriebs (31), deren Wirkung (F'i) durch dieselben Steuertasten (Ti) für die Wirkung (Fi) des Funkbetriebs (21) gesteuert wird, wobei die erneute Spannungszufuhr zum Funkgerät nach Abbruch der Speisung Zugang, sog. unfreiwilligen Zugang, zum Antdiebstahlbetrieb (31) in Verriegelungsstellung auslöst, und der Übergang vom Antidiebstahlbetrieb in der Verriegelungsstellung nach dem Funkbetrieb durch Eingeben eines Codes in den Mikroprozessor (11) erreicht wird, wobei dieser Code gleich einem vorgespeicherten Code in einem dem Mikroprozessor (11) zugeordneten, nichtflüchtigen Speicher (13) ist, dadurch gekennzeichnet, daß der Mikroprozessor Zugang, d. h. sog. freiwilligen Zugang, zum Antidiebstahlbetrieb (31) erlaubt, ausgehend vom Funkbetrieb (21) durch gleichzeitiges Betätigen von wenigstens zwei (T1, T2) der Tasten (Ti).

2. Antidiebstahlanordnung nach Anspruch 1, dadurch gekennzeichnet, daß die Betätigung wenigstens einer (T3) der Drucktasten (Ti) die Verriegelung des Antidiebstahlbetriebs (31) nach freiwilligem Zugang ermöglicht.

3. Antidiebstahlanordnung nach Anspruch 1, dadurch gekennzeichnet, daß nach freiwilligem Zugang zum Antidiebstahlbetrieb (31) eine Betätigung einer (T9) der Drucktasten (Ti), gefolgt von aufeinanderfolgenden Betätigungen einer (T4, T5) der Drucktasten (Ti) zum Codieren und zweier (T7, T8) der Drucktasten (Ti) zum Bekräftigen der Speicherung, die Änderung des im nichtflüchtigen Speicher (13) eingeschriebenen Codes und die Rückkehr zum Funkbetrieb (21) ermöglicht.

4. Antidiebstahlanordnung nach Anspruch 1, dadurch gekennzeichnet, daß nach freiwilligem Zugang zum Antidiebstahlbetrieb (31) eine Bedienung einer (T10) der Drucktasten (Ti) die direkte Rückkehr nach dem Funkbetrieb (21) ermöglicht.

5. Antidiebstahlanordnung nach einem der Ansprüche 1 bis 4, dadurch gekennzeichnet, daß das Funkgerät einen FM-Empfänger und einen alphanumerischen Frequenzanzeiger enthält, daß der im nichtflüchtigen Speicher (13) eingeschriebene Code aus für eine Frequenz der Frequenzmodulation bezeichnenden Zahlen besteht, und daß die zum Codieren vorgesehene Drucktaste (T4, T5) eine Sendersuchtaste ist.

6. Antidiebstahlanordnung nach einem der Ansprüche 3 bis 5, dadurch gekennzeichnet, daß die zur Bekräftigung der Speicherung eines neuen Codes vorgesehenen Drucktasten (T7, T8) die im Funkbetrieb zum Bekräftigen und Einschreiben der vom Benutzer ausgewählten Sendefrequenzen vorgesehenen Drucktasten sind.

FIG.1

FIG.2